**Europäisches Patentamt**

**European Patent Office**

**Office européen des brevets**

(19)

(11) Veröffentlichungsnummer: **0 282 719 B1**

(12) **EUROPÄISCHE PATENTSCHRIFT**

(45) Veröffentlichungstag der Patentschrift:
27.03.91 Patentblatt 91/13

(51) Int. Cl.⁵: **H04N 1/06**, H04N 1/028

(21) Anmeldenummer: 88101632.3

(22) Anmeldetag: 04.02.88

(54) **Abtastvorrichtung für einen Speicherleuchtschirm.**

(30) Priorität: 17.02.87 DE 3704994

(43) Veröffentlichungstag der Anmeldung:
21.09.88 Patentblatt 88/38

(45) Bekanntmachung des Hinweises auf die
Patenterteilung:
27.03.91 Patentblatt 91/13

(84) Benannte Vertragsstaaten:
DE FR GB NL

(56) Entgegenhaltungen:
EP-A- 0 073 086
EP-A- 0 179 247

(56) Entgegenhaltungen:
US-A- 1 663 308
US-A- 1 800 000
US-A- 2 044 831
US-A- 2 298 911
US-A- 3 264 407
US-A- 3 566 119

(73) Patentinhaber: Siemens Aktiengesellschaft
Wittelsbacherplatz 2
W-8000 München 2 (DE)

(72) Erfinder: Tressl, Günther
Dompfaffstrasse 12
W-8526 Bubenreuth (DE)
Erfinder: Conrad, Bernhard
Rosenau 19
W-8520 Erlangen (DE)

**Beschreibung**

Die Erfindung betrifft eine Abtastvorrichtung für einen Speicherleuchtschirm, in dem Röntgenstrahlenbilder latent gespeichert sind, mit einer Trommel zur Aufnahme des Speicherleuchtschirmes, mit einer Strahlenquelle, durch deren Abtaststrahl zur Bildwiedergabe der Speicherleuchtschirm bildpunktweise zum Leuchten angeregt wird, wobei der Abtaststrahl über einen im Zentrum der Trommel liegenden, relativ zur Trommel rotierenden Umlenkspiegel geführt ist und die Trommel im Sinne einer Zeilenabtastung relativ zum Umlenkspiegel verschoben wird, mit einem Lichtleiter zur Erfassung des von dem Speicherleuchtschirm emittierten Lichtes und mit einem Detektor zur Umwandlung des emittierten Lichtes in eine elektrische Signalfolge.

Eine derartige Abtastvorrichtung ist in der EP-A-0 179 247 beschrieben, bei der die bildpunktweise Abtastung des Speicherleuchtschirmes durch einen rotierenden Umlenkspiegel erfolgt. Eine mit einem Detektor verbundene, kreisförmige Lichtleiterplatte aus Quarzglas, in deren Mitte sich der Umlenkspiegel befindet, bewirkt die Leitung des vom Speicherleuchtschirm emittierten Lichtes auf die lichtempfindliche Eingangsfläche des Detektors. Zur zeilenweisen Abtastung des Speicherleuchtschirmes wird die Trommel gegenüber dem Abtast-und Erfassungssystem relativ verschoben, so daß der rotierende Abtaststrahl den Speicherleuchtschirm zeilenweise abtastet. Durch die kreisförmige Lichtleiterplatte wird aber nicht eine optimale Lichtführung erreicht. Vielmehr geht ein relativ großer Anteil des vom Speicherleuchtstoff emittierten Lichtes durch Absorption oder durch entsprechende Lichtführung verloren.

Deshalb wurden in der zitierten europäischen Patentanmeldung Lichtleiter vorgeschlagen, die außerhalb der Trommel angeordnet sind, die in diesem Falle durchsichtig ausgeführt ist. Über Spiegelflächen des Lichtleiters wird das emittierte Licht auf den Detektor geleitet. Hierbei erweist es sich als problematisch, daß relativ große Detektoren Verwendung finden müssen. Weiterhin sind Lichtleiter bekannt, die mehrere Spiegelflächen aufweisen, so daß eine mehrfache Umlenkung erfolgt. In diesem Falle lassen sich auch kleinere Detektoren verwenden. Derartige Lichtleiter sind aber relativ aufwendig herzustellen. Weiterhin muß der Lichtleiter, da der Detektor außerhalb der Trommel angeordnet sein muß, eine Länge aufweisen, die der Länge der abzutastenden Speicherleuchtstoffolie bzw. Trommel entspricht. Dadurch werden zusätzlich die Lichtverluste durch Absorption erhöht.

Die Erfindung geht von der Aufgabe aus, eine Abtastvorrichtung der eingangs genannten Art zu schaffen, bei der ein hoher Prozentsatz des vom Speicherleuchtschirm emittierten Lichtes dem Fotodetektor zugeführt werden kann und die eine relativ kompakte Bauform aufweist.

Die Aufgabe wird erfindungsgemäß dadurch gelöst, daß der Umlenkspiegel in der Mitte eines Meßkopfes angebracht ist, daß ein gebogener Lichtleiter an dem Meßkopf derart angebracht ist, daß dessen erste Stirnfläche auf dem Umfang des Meßkopfes angeordnet ist und den Auftreffpunkt des Abtaststrahles auf dem Speicherleuchtschirm vollständig umgibt und daß dessen zweite Stirnfläche senkrecht zur Trommelachse in der Mitte des Meßkopfes angeordnet ist und der lichtempfindlichen Fläche des Detektors gegenüberliegt. Durch diese Anordnung wird erreicht, daß ein großer Anteil des vom Speicherleuchtschirm emittierten Lichtes durch den Lichtleiter eingefangen werden kann. Durch die gebogene Form wird auch nahezu das gesamte eingefangene Licht auf den Fotodetektor zugeführt. Das bedeutet, daß an den Seitenwänden aufgrund der Totalreflexion kein Verlust durch Lichtaustritt erfolgt, andererseits aber das gesamte Licht aus der zweiten Stirnfläche heraustreten kann, da hier keine Totalreflexion auftritt. Dadurch, daß der Umlenkspiegel und der Lichtleiter starr an einem Meßkopf angebracht sind, läßt sich dieser mit hoher Geschwindigkeit rotieren.

Der Lichtleiter kann aus einfachem optischem Material, beispielsweise Acrylglas, bestehen, wenn er eine Bohrung für den abgelenkten Abtaststrahl aufweist, die in der Mitte der ersten Stirnfläche endet. Dadurch wird der Abtaststrahl nicht durch den Lichtleiter geführt, so daß zum einen keine Absorption des Abtaststrahles erfolgt und zum anderen keine diffus gestreuten Anteile des Abtaststrahles auf den Detektor gelangen können. Die Bohrung paßt sich der Form des fokussierten Abtaststrahles an, so daß sie möglichst klein gehalten werden kann, wenn die Bohrung für den Laserstrahl konisch ist, wobei der Durchmesser der Bohrung bei der ersten Stirnfläche des Lichtleiters am kleinsten ist. Die Einflüsse auf die Lichtleitung des emittierten Lichtes werden erniedrigt, wenn die Innenwand der Bohrung poliert ist.

Die Lichtführung des Lichtleiters wird noch verbessert, wenn der Lichtleiter sich von seiner ersten Stirnfläche her zumindest bereichsweise konisch aufweitet. Eine vorteilhafte Lichtführung wird erreicht, wenn der Lichtleiter eine zumindest bereichsweise bogenförmig gekrümmte erste Seitenwand aufweist, die mit der ersten Stirnfläche einen Winkel von 90° bildet. Eine Totalreflexion des gesamten Lichtes wird bei gleichzeitiger Möglichkeit einer einfachen Befestigung an dem Meßkopf erreicht, wenn die zweite Seitenwand des Lichtleiters mit dessen ersten Stirnfläche einen Winkel von größer als 90° aufweist und die zweite Seitenwand bereichsweise gekrümmt ist, wobei sie im Abstand von der ersten Stirnfläche gerade Bereiche zur Aufnahme von Befestigungselementen aufweist. Hohe Abtastgeschwindigkeiten lassen sich erreichen, wenn der Meßkopf ein im wesentlichen zylinderförmiges Gehäuse aufweist, das mit einem mit einer Hohlachse versehenen Motor zum Antrieb verbunden ist.

Die Erfindung ist nachfolgend anhand eines in der Zeichnung dargestellten Ausführungsbeispieles näher erläutert. Es zeigen :

Fig. 1 ein Übersichtsbild einer erfindungsgemäßen Abtastvorrichtung mit einer daran angeschlossenen Fernseheinrichtung,

Fig. 2 einen Schnitt durch die erfindungsgemäße Abtastvorrichtung, und

Fig. 3 und 4 Schnitte durch den erfindungsgemäßen Lichtleiter.

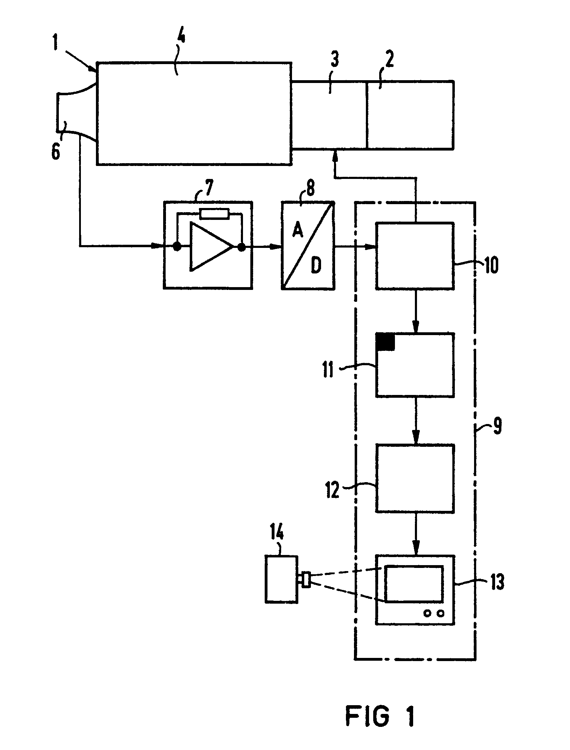

In der Fig. 1 ist eine Abtastvorrichtung 1 zur Umsetzung gespeicherter Bildsignale, insbesondere von Röntgenstrahlenbildern, dargestellt. Sie besteht aus einer Strahlenquelle 2, deren Abtaststrahl über einen Abtaster 3 auf einen in einer Trommel 4 befestigten folienhaften Speicherleuchtschirm 5 geleitet wird. Das durch die Abtastung emittierte Licht gelangt auf einen Detektor 6, beispielsweise einen Photomultiplier. Die Ausgangssignale des Detektors 6 werden über einen Verstärker 7 und einen Analog/Digital-Wandler (A/D-Wandler 8) einer Bildverarbeitungseinrichtung 9 zugeführt. Diese weist einen Mikroprozessor 10 auf, der mit einem Speicher 11 verbunden ist, in den die digitalen Ausgangssignale des Detektors 6 eingelesen werden. An dem Speicher 11 ist ein Rechner 12 angeschlossen, der die gespeicherten Signale in ein Videosignal umwandelt, das auf einem Monitor 13 wiedergegeben werden kann. Eine auf den Monitor 13 ausgerichtete Kamera 14 dient beispielsweise zur dauerhaften Speicherung des Videobildes. Zur Synchronisation der Abtastung des Speicherleuchtschirmes 5 ist der Mikroprozessor 10 mit dem Abtaster 3 verbunden.

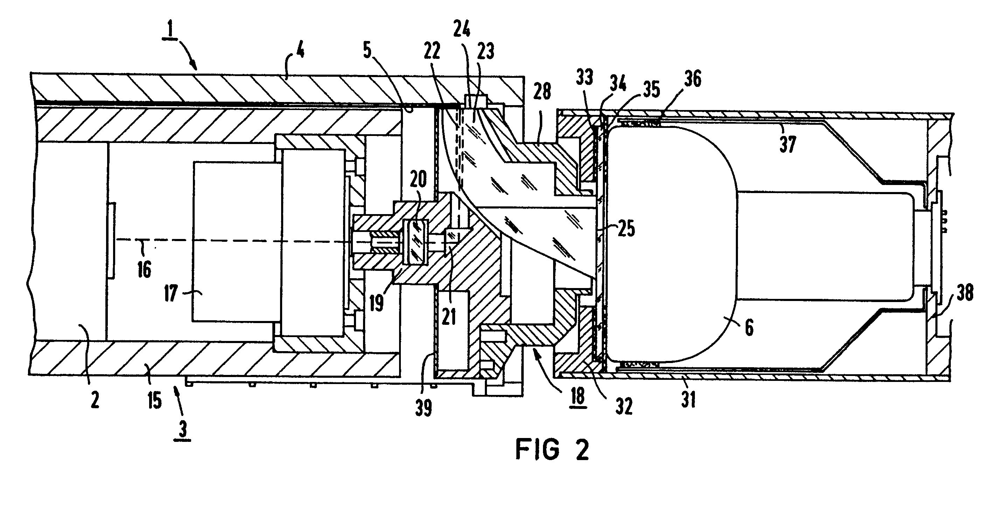

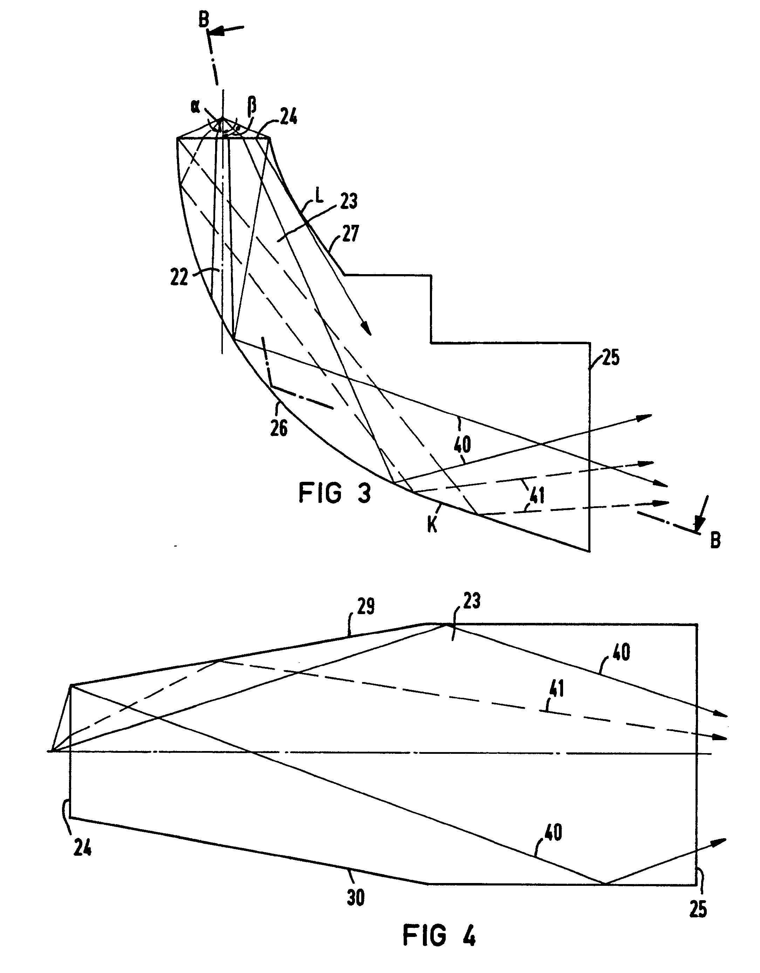

In der Fig. 2 ist die erfindungsgemäße Abtastvorrichtung 1 dargestellt. Sie weist die Trommel 4 auf, an deren Innenwand ein Speicherleuchtschirm 5 befestigt ist. Innerhalb der Trommel 4 befindet sich ein Halterohr 15, in dem die Strahlenquelle 2 befestigt ist. Die Strahlenquelle 2 kann einen 30 mW Helium-Neon-Laser (He-Ne) enthalten, der einen Lichtstrahl einer ersten Wellenlänge erzeugt. Dieser Lichtstrahl wird in einem ebenfalls zur Strahlenquelle 2 gehörenden Aufweitsystem auf einen Durchmesser von beispielsweise 4 mm aufgeweitet. Der in der Achse der Trommel 4 austretende Abtaststrahl 16 der Strahlenquelle 2 geht durch eine hohle, konzentrisch die Achse der Trommel 4 umgebende Welle eines am vorderen Ende des Halterohres 15 befestigten Motors 17. An der Welle ist ein Meßkopf 18 angebracht, der von dem Motor 17 beispielsweise mit einer Geschwindigkeit von 4 000 U/min angetrieben wird. Der Meßkopf 18 weist eine Tragvorrichtung 19 auf, die an der Welle des Motors 17 befestigt ist. Der durch die hohle Welle des Motors 17 durchtretende Abtaststrahl 16 tritt durch eine in der Tragvorrichtung 19 befestigte Fokussiervorrichtung 20 und fällt in ein als Umlenkspiegel wirkendes dreieckförmiges Umlenkprisma 21, das den Abtaststrahl 16 aus der Richtung der Trommelachse in radialer Richtung ablenkt. Der Abtaststrahl 16 durchdringt auf seinem weiteren Weg eine Bohrung 22 eines in den Fig. 3 und 4 näher dargestellten Lichtleiters 23 und fällt auf den Speicherleuchtschirm 5, so daß dieser entsprechend dem gespeicherten, latenten Strahlungsbild Licht einer zweiten Wellenlänge emittiert.

Der Lichtleiter 23 befindet sich mit einer ersten Stirnfläche 24 in geringem Abstand, beispielsweise 3,5 mm, von dem Speicherleuchtschirm 5. Die Bohrung 22 befindet sich etwa in der Mitte der ersten Stirnfläche 24, so daß der Auftreffpunkt des Abtaststrahles 16 auf den Speicherleuchtschirm von der ersten Stirnfläche 24 des Lichtleiters 23 umgeben ist, so daß ein großer Anteil des vom Speicherleuchtschirm 5 emittierten Lichtes in die erste Stirnfläche 24 des Lichtleiters 23 eindringen kann.

Die durch die erste Stirnfläche 24 des in Fig. 3 dargestellten Lichtleiters 23 eingetretenen Lichtstrahlen werden durch Totalreflexion an den Seitenwänden 26, 27, 29 und 30, wie durch Pfeile 40 und 41 dargestellt, derart geleitet, daß sie auf der zweiten Stirnfläche 25, die senkrecht zur ersten Stirnfläche 24 ausgerichtet ist, vollständig austreten. Hierzu weist eine erste Seitenwand 26 einen zumindest bereichsweise gekrümmten Verlauf auf. Im Schnittpunkt der ersten Seitenwand 26 mit der ersten Stirnfläche 24 bilden die Flächen einen rechten Winkel. Die erste Seitenwand 26 verläuft weiterhin auf einem Kreisbogen eines Radius bis zu dem Punkt K. Danach verläuft die erste Seitenwand 26 geradlinig weiter. Die gegenüberliegende zweite Seitenwand 27 des Lichtleiters 23 bildet mit der ersten Stirnfläche 24 einen Winkel, der größer als 90° ist. Sie verläuft im ersten Abschnitt auf einem Kreisbogen, der einen kleineren Radius als die erste Seitenwand 26 und einen versetzten Mittelpunkt aufweist. Im weiteren Verlauf ist die zweite Seitenwand 27 geradlinig bzw. rechtwinklig ausgeführt, wobei eine Nase zur Befestigung des Lichtleiters 23 an einem Halter 28 des Meßkopfes 18 dient, der mit der Tragvorrichtung 19 verbunden ist. Die offene Seite des Meßkopfes 18 ist mit einer Abdeckplatte 39 verkleidet, damit dieser strömungsgünstig ausgeführt ist.

In der Fig. 4 ist der in Fig. 3 dargestellte Lichtleiter 23 entlang der geknickten Linie B geschnitten dargestellt. Die dritte und vierte Seitenwand 29 und 30 sind gerade ausgeführt, wobei sie sich von der ersten Stirnfläche 24 aus konusförmig erweitern, um im Bereich der zweiten Stirnfläche 25 rechteckförmig zu verlaufen. Dadurch wird erreicht, daß der Lichtleiter 23 einen größeren Anteil des von dem Leuchtschirm 5 emittierten Lichtes erfaßt.

An dem Meßkopf 18 liegt gegenüber dem Halterohr 15 für die Strahlenquelle 2 und den Motor 17 ein zweites Halterohr 31, dessen Achse mit der Achse des ersten Halterohres 15 fluchtet. Im vorderen Bereich ist das zweite Halterohr 31 mit einer Abstützvorrichtung 32 versehen, die mit Filz 33 versehene Auflageflächen aufweist, auf die ein optisches Sperrfilter 34 (BG 3) gelegt ist, das einen Sperrbereich von der ersten Wellenlänge aufweist, um Streulicht des Abtaststrahles 16 zu eliminieren. Über einer am Rand des Sperrfilters 34 angeordneten Lochscheibe 35 aus Filz stützt sich der Detektor 6 mit seiner Eingangsfläche ab. Seitlich wird der Detektor 6 durch einen Filzring 36 von einer Abschirmung 37 gehalten, die beispielsweise aus Mu-Metall besteht. Die Abschirmung 37 umgibt den gesamten Seitenbereich des Detektors 6. Sie ist an einer Haltevorrichtung 38 befestigt, die den Sockel des Detektors 6 arretiert.

Das aus der zweiten Stirnfläche 25 des Lichtleiters 23 austretende Licht durchtritt das optische Sperrfilter 34, das in geringem Abstand von beispielsweise 2 mm von der zweiten Stirnfläche 25 des Lichtleiters 23 angeordnet ist. Das optische Sperrfilter 34 kann, wie dargestellt, sich in geringem Abstand von dem Glaskolben des Detektors 6 befinden. Es kann aber auch direkt oder über weitere optische Mittel mit dem Glaskolben gekoppelt sein, so daß kein weiterer Lichtverlust entsteht.

Die beiden Halterohre 15 und 31 sind an ihren Enden über nicht dargestellte Lagerböcke fest mit der Abstastvorrichtung 1 verbunden. Die Trommel 4 ist an einem nicht dargestellten Schlitten befestigt, der durch einen Motor von der dargestellten Ausgangsstellung langsam nach rechts bewegt werden kann, so daß der durch den Meßkopf 18 rotierende Abtaststrahl 16 nach jeder Umdrehung auf einen neuen Bereich des Speicherleuchtschirmes 5 fällt, so daß die Fläche des Speicherleuchtschirmes 5 nacheinander zeilenweise vollständig abgetastet wird.

Damit die Justierung des Abtaststrahles 16 unkristisch ist, weist die Bohrung 22 oben einen Durchmesser von beispielsweise 2 mm auf. Die Bohrung 22 ist konisch mit einem unteren Durchmesser von beispielsweise 3,5 mm ausgeführt. Die Innenwand der Bohrung 22 ist poliert, so daß das Licht im Lichtleiter 23 je nach Einfallswinkel entweder hindurchgeht oder total reflektiert wird. In beiden Fällen ist der weitere Verlauf des Lichtstrahles meist so, daß das Licht zur zweiten Stirnfläche 25 geleitet wird.

Beim Eintritt des vom Speicherleuchtschirm 5 emittierten Lichtes in die erste Stirnfläche 24 entsteht jedoch ein Verlust, da das Licht, das innerhalb der Lochapertur auf die Innenwand der Bohrung 22 trifft, durch den Lichtleiter 23 hindurchgeht und fast immer an einer der Seitenwände austritt. Dieser Verlust wird durch den Abstand von 3,5 mm der ersten Stirnfläche 24 des Lichtleiters 23 vom Speicherleuchtschirm 5 jedoch klein gehalten. Bei einem halben Öffnungswinkel von beispielsweise Alpha = 16° ergibt sich ein Verlust von 8%.

Dieser Abstand von 3,5 mm bewirkt wiederum durch die begrenzte Eingangsapertur einen Verlust bei großen Einfallswinkeln. Dieser Verlust wird dadurch klein gehalten, daß die erste Stirnfläche 24 des Lichtleiters 23 hinreichend groß ist. Durch eine Breite von beispielsweise 20 mm treffen in der dargestellten Ebene alle Lichtstrahlen mit einem Einfallswinkel bis Beta = 70° auf den Lichtleiter 23, so daß etwa 88% des emittierten Lichtes erfaßt werden.

Durch den Verlust der Bohrung treffen somit 80% des emittierten Lichtes auf die erste Stirnfläche 24 des Lichtleiters 23. Die Oberflächenreflexion beträgt im Mittel 5,5% bei einem Brechungsindex n = 1,5. Das bedeutet, daß etwa 75% des vom Speicherleuchtschirm 5 emittierten Lichtes in den Lichtleiter 23 eintreten.

Bei der Verwendung von Acrylglas als Lichtleiter 23 tritt eine Absorption von ca. 7% auf. Weiterhin entsteht ein Verlust durch Reflexion an der zweiten Stirnfläche 25. Der Einfallswinkel auf diese zweite Stirnfläche 25 ist kleiner als 28°. Bei einem Lichtleitermaterial von Acrylglas mit einem Brechungsindex von n = 1,5 bedeutet das im Mittel weniger als 5% Reflexionsverlust. Dadurch ergibt sich eine Bilanz der Lichtüberführung bis zum Sperrfilter 34 von ca. 67%.

Bei einem Brechungsindex von n = 1,5 des Lichtleiters 23 wird Licht durch Totalreflexion weitergeleitet, wenn der Einfallswinkel auf die Wand größer als 42° ist. Deshalb wurden die erste und die zweite Seitenwand 26, 27 derart ausgeführt, daß der Einfallswinkel immer erheblich größer ist, um eine Reserve beispielsweise bei gewellten Oberflächen zu haben. Daraus folgt, daß der Lichtleiter 23 in seiner Herstellung unkritisch ist.

Gleichzeitig ist dabei aber zu berücksichtigen, daß der Winkel auf die zweite Stirnfläche 25 kleiner als 42° sein muß, damit das Licht nicht durch Totalreflexion zurückgehalten wird. Vorzugsweise ist dieser Winkel erheblich kleiner zu wählen, damit auch kein erhöhter Oberflächen-Reflexionsverlust auftritt.

Durch die Aufweitung des Lichtleiters von beispielsweise 20 mm auf seiner ersten Stirnfläche 24 auf 40 mm seiner zweiten Stirnfläche 25 auf einer Länge von 55 mm ergibt sich eine Schräglage der dritten und vierten Seitenwand um 10°, so daß der Einfallswinkel auf 20° begrenzt wird. Durch die Form der ersten und zweiten Seitenwände 26 und 27 wird der Einfallswinkel auf die zweite Stirnfläche ebenfalls auf 20° begrenzt, so daß sich aus den beiden zueinander senkrechten Winkeln ein maximaler Einfallswinkel von 28° ergibt.

Die zweite Seitenwand 27 bildet mit der ersten Stirnfläche 24 beispielsweise einen Winkel von 105°, damit das von ihr reflektierte Licht nicht aus der ersten Seitenwand 26 austreten kann. Dadurch ergibt sich aber auch in der in Fig. 3 dargestellten Ebene eine konische Aufweitung des Lichtleiters 23. Da bei dieser Ausführungsform das in die erste Stirnfläche 24 eintretende Licht nur bis zum Punkt L auf die zweite Seitenwand 27 fällt, kann diese außerhalb dieses genannten Bereiches, wie dargestellt, beliebig gestaltet werden, ohne daß die Lichtführung beeinträchtigt wird.

Die mit Pfeile 40 bezeichneten Lichtstrahlen verlaufen beispielsweise in der Zeichenebene, während die mit Pfeile 41 bezeichneten Lichststrahlen außerhalb derselben verlaufen.

## Ansprüche

1. Abtastvorrichtung (1) für einen Speicherleuchtschirm (5), in dem Röntgenstrahlenbilder latent gespeichert sind, mit einer Trommel (4) zur Aufnahme des Speicherleuchtschirmes (5), mit einer Strahlenquelle (2), durch deren Abtaststrahl (16) zur Bildwiedergabe der Speicherleuchtschirm (5) bildpunktweise zum Leuchten angeregt wird, wobei der Abtaststrahl (16) über einen im Zentrum der Trommel (4) liegenden, relativ zur Trommel (4) rotierenden Umlenkspiegel (21) geführt ist und die Trommel (4) im Sinne einer Zeilenabtastung relativ zum Umlenkspiegel (21) verschoben wird, mit einem Lichtleiter (23) zur Erfassung des von dem Speicherleuchtschirm (5) emittierten Lichtes und mit einem Detektor (6) zur Umwandlung des emittierten Lichtes in eine elektrische Signalfolge, **dadurch gekennzeichnet**, daß der Umlenkspiegel (21) in der Mitte eines Meßkopfes (18) angebracht ist, daß ein gebogener Lichtleiter (23) an dem Meßkopf (18) derart angebracht ist, daß dessen erste Stirnfläche (24) auf dem Umfang des Meßkopfes (18) angeordnet ist und den Auftreffpunkt des Abtaststrahles (16) auf dem Speicherleuchtschirm (5) vollständig umgibt und daß dessen zweite Stirnfläche (25) senkrecht zur Trommelachse in der Mitte des Meßkopfes (18) angeordnet ist und der lichtempfindlichen Fläche des Detektors (6) gegenüberliegt.

2. Abtastvorrichtung (1) nach Anspruch 1, **dadurch gekennzeichnet**, daß der Lichtleiter (23) eine Bohrung (22) für den abgelenkten Abtaststrahl (16) aufweist, die in der Mitte der ersten Stirnfläche (24) endet.

3. Abtastvorrichtung (1) nach Anspruch 2, **dadurch gekennzeichnet**, daß die Bohrung (22) für den Abtaststrahl (16) konisch ist, wobei der Durchmesser der Bohrung (22) bei der ersten Stirnfläche (24) des Lichtleiters (23) am kleinsten ist.

4. Abtastvorrichtung (1) nach Anspruch 2 oder 3, **dadurch gekennzeichnet**, daß die Innenwand der Bohrung (22) poliert ist.

5. Abtastvorrichtung (1) nach einem der Ansprüche 1 bis 4, **dadurch gekennzeichnet**, daß sich der Lichtleiter (23) von seiner ersten Stirnfläche (24) her zumindest bereichsweise konisch aufweitet.

6. Abtastvorrichtung (1) nach einem der Ansprüche 1 bis 5, **dadurch gekennzeichnet**, daß der Lichtleiter (23) eine zumindest bereichsweise bogenförmig gekrümmte erste Seitenwand (26) aufweist, die mit der ersten Stirnfläche (24) einen Winkel von 90° bildet.

7. Abtastvorrichtung (1) nach einem der Ansprüche 1 bis 6, **dadurch gekennzeichnet**, daß die zweite Seitenwand (27) des Lichtleiters (23) mit dessen erster Stirnfläche (24) einen Winkel von größer als 90° aufweist und die zweite Seitenwand (27) bereichsweise gekrümmt ist, wobei sie im Abstand von der ersten Stirnfläche (24) gerade Bereiche zur Aufnahme von Befestigungselementen aufweist.

8. Abtastvorrichtung (1) nach einem der Ansprüche 1 bis 7, **dadurch gekennzeichnet**, daß der Meßkopf (18) ein im wesentlichen zylinderförmiges geschlossenes Gehäuse (19, 28, 39) aufweist, das mit einem mit einer Hohlachse versehenen Motor (17) zum Antrieb verbunden ist.

## Claims

1. A scanning device (1) for a storage luminescent screen (5), in which the x-ray images are stored in a latent manner, with a drum (4) for accommodating the storage luminescent screen (5), with an x-ray source (2), through the scanning beam (16) of which, for the image reproduction, the storage luminescent screen (5) is induced to illuminate in pixels, wherein the scanning beam (16) is guided by way of a deviation mirror (21) lying in the centre of the drum (4), and rotating relative to the drum (4), and the drum is displaced in a line scanning manner, relative to the deviation mirror (21), with a light conductor (23) for detecting the light emitted by the storage luminescent screen (5) and with a detector (6) for converting the emitted light into an electric signal sequence, characterised in that the deviation mirror (21) is attached in the centre of a measuring head (18), in that a curved light conductor (23) is attached to the measuring head (18), such that its first end face (24) is arranged on the periphery of the measuring head (18) and surrounds completely the point of incidence of the scanning beam (16) on the storage luminescent screen (5), and in that its second end face (25) is arranged perpendicular to the drum axis in the centre of the measuring head (18) and lies opposite the light-sensitive face of the detector (6).

2. A scanning device (1) according to claim 1, characterised in that the light conductor (23) has a bore (22) for the deflected scanning beam (16), which terminates in the centre of the first end face (24).

3. A scanning device (1) according to claim 2, characterised in that the bore (22) for the scanning beam (16) is conical, wherein the diameter of the bore (22) is smallest at the first end face (24) of the light conductor (23).

4. A scanning device (1) according to claim 2 or 3, characterised in that the inner wall of the bore (22) is polished.

5. A scanning device (1) according to one of claims 1 to 4, characterised in that the light conductor (23) expands conically from its first end face (24) at least partly.

6. A scanning device (1) according to one of claims 1 to 5, characterised in that the light conductor (23) has a first side wall (26) which is at least partly bent into a curved form, which end wall (26) forms with the first end face (24) an angle of 90°.

7. A scanning device (1) according to one of claims 1 to 6, characterised in that the second side wall (27) of the light conductor (23) has an angle of greater than 90° with its first end face (24), and the second side wall (27) is partly curved, wherein it has straight parts spaced from the first end face (24) for accommodating fastening elements.

8. A scanning device (1) according to one of claims 1 to 7, characterised in that the measuring head (18) has a substantially cylindrical closed housing (19, 28, 39), which is connected for driving to a motor (17) provided with a hollow axle.

## Revendications

1. Dispositif de balayage (1) pour un écran luminescent à longue persistance (plaque mémoire) (5), dans lequel sont mémorisés des radiographies, avec un tambour (4) qui reçoit l'écran luminescent à longue persistance (5), avec une source de rayonnement (2), dont le rayon de balayage (16) excite la luminescence, point par point, pour la restitution de l'image, le rayon de balayage (16) étant guidé par un miroir de déviation (21) situé au centre du tambour (4) et tournant par rapport audit tambour (4) et ce dernier étant déplacé par rapport au miroir de déviation (21) dans le sens de balayage de lignes, avec un guide d'ondes de lumière (23) pour saisir la lumière émise par l'écran luminescent à longue persistance (5) et avec un détecteur (6) pour convertir la lumière émise en un train de signaux, caractérisé par le fait que le miroir de déviation (21) est monté au milieu d'une tête de mesure (18), qu'un guide d'ondes de lumière incurvé (23) est monté de telle façon sur la tête de mesure (18) que sa première surface frontale (2 4) est située à la périphérie de la tête de mesure (18) et entoure complètement le point d'incidence du rayon de balayage (16) sur l'écran luminescent à longue persistance (5), et que sa seconde surface frontale (25) est disposée perpendiculairement à l'axe du tambour, au milieu de la tête de mesure (8) et se situe en face de la surface photosensible du détecteur (6).

2. Dispositif de balayage (1) selon la revendication 1, caractérisé par le fait que le guide d'ondes de lumière (23) comporte un perçage (22) pour le rayon de balayage dévié (6), lequel perçage se termine au milieu de la première surface frontale (24).

3. Dispositif de balayage (1) selon la revendication 2, caractérisé par le fait que le perçage (22) pour le rayon de balayage (16) est conique, le diamètre du perçage (22) étant le plus petit au niveau de la première surface frontale (24) du guide d'ondes de lumière.

4. Dispositif de balayage (1) selon la revendication 2 ou 3, caractérisé par le fait que la paroi intérieure du perçage (22) est polie.

5. Dispositif de balayage (1) selon l'une des revendications 1 à 4, caractérisé par le fait que le guide d'ondes de lumière (23) s'élargit, au moins par zones, à partir de sa première surface frontale (24).

6. Dispositif de balayage (1) selon l'une des revendications 1 à 5, caractérisé par le fait que le guide d'ondes de lumière (23) comporte une première paroi latérale (26) courbe au moins par zones, laquelle paroi latérale forme un angle de 90° avec la première surface frontale (24).

7. Dispositif de balayage selon l'une des revendications 1 à 6, caractérisé par le fait que la seconde paroi latérale (27) du guide d'ondes de lumière (23) forme avec la première surface frontale (24) de ce dernier, un angle qui est supérieur à 90°, et que la seconde paroi latérale (27) est courbe par zones, alors qu'elle présente, à distance de la première surface frontale (24) des zones droites pour recevoir des éléments de fixation.

8. Dispositif de balayage (1) selon l'une des revendications 1 à 7, caractérisé par le fait que la tête de mesure (18) comporte un boîtier fermé (19,28,39) de forme sensiblement cylindrique, lequel boîtier est relié, pour l'entraînement, avec un moteur (17) qui est pourvu d'un axe creux.

FIG 1

FIG 2

EP 0 282 719 B1

FIG 3

FIG 4